# EUROPÄISCHE PATENTSCHRIFT

(11) **EP 2 112 397 B1**
(45) Veröffentlichungstag und Bekanntmachung des Hinweises auf die Patenterteilung: **14.08.2013**
(21) Anmeldenummer: 09158628.9
(22) Anmeldetag: 23.04.2009
(51) Int. Cl.: F16D 65/097, F16D 66/02

(54) **Niederhalter für die Bremsbeläge einer Scheibenbremse sowie Kabelhalter hierfür**
Binder for the brake linings of a disc brake and cable holder for same
Système d'assujettissement pour les garnitures d'un frein à disques et support de câble correspondant

(30) Priorität: 25.04.2008 DE 102008021008
(43) Veröffentlichungstag der Anmeldung: 28.10.2009
(73) Patentinhaber: BPW Bergische Achsen KG, 51674 Wiehl (DE)
(72) Erfinder: Olbrich, Tobias, 71083, Herrenberg (DE); Kappel, Sebastian, 72160, Horb am Neckar (DE)
(74) Vertreter: Christophersen, Ulrich Rudolf

(56) Entgegenhaltungen:
- EP-A- 0 190 705
- EP-A- 1 982 852
- WO-A-03/038298
- WO-A-2008/060392
- FR-A- 2 111 070
- GB-A- 2 231 928

## Beschreibung

Die Erfindung betrifft einen Niederhalter für die Bremsbeläge einer Scheibenbremse, mit einem an der Scheibenbremse festlegbaren und sich quer zu den Brembelägen erstreckenden Haltebügel, und mit einem an dem Haltebügel befestigten Kabelhalter, welcher zusammen mit der den Bremsbelägen abgewandten Seite des Haltebügels einen zumindest über eine Teillänge des Haltebügels geschlossenen Querschnitt für die Hindurchführung eines Signal- oder Steuerkabels bildet.

Die Erfindung betrifft ferner einen Kabelhalter mit einem daran befestigten Signal- oder Steuerkabel einer Scheibenbremse, der aus dünnem Material geformt ist und zwei voneinander beabstandete Längsteile und einen diese miteinander verbindenden Quersteg aufweist.

Ein gattungsgemäßer Niederhalter für Bremsbeläge einer Scheibenbremse ist aus der EP 0 190 705 A2 bekannt. Er besteht aus einer Belagniederhaltefeder mit einem Zentralelement und zwei Anpressstegen, die sich von außen her auf den Bremsbelägen abstützen. An einem der beiden Anpressstege ist ein Kabelhalter so befestigbar, dass er zusammen mit der den Bremsbelägen abgewandten Seite des Anpresssteges einen geschlossenen Querschnitt bildet. Durch diesen Querschnitt ist ein Signal- oder Steuerkabel der Scheibenbremse hindurchgeführt.

Ziel der Erfindung ist eine im Hinblick auf Wartungsarbeiten an der Scheibenbremse besonders sichere Ausgestaltung des Niederhalters für dein Einsatz bei solchen Scheibenbremsen, bei denen zu Steuerungs- oder Sensorikzwecken Signal- oder Steuerleitungen über die sich drehenden Teile der Scheibenbremse hinweggeführt werden müssen. Ferner soll ein für derartige Einsatzzwecke besonders geeigneter Kabelhalter geschaffen werden.

Zur **Lösung** wird ein Niederhalter mit den Merkamelen des Anspruchs 1 vorgeschlagen.

Als weitere **Lösung** wird ein Kabelhalter mit den Merkmalen des Anspruchs 14 vorgeschlagen.

Ein solcher Niederhalter für die Bremsbeläge einer Scheibenbremse bzw. ein solcher Kabelhalter ermöglicht eine geschützte Unterbringung von Signal- oder Steuerleitungen, welche außen über die sich drehenden Teile der Scheibenbremse und insbesondere über die Bremsscheibe hinweggeführt werden müssen, um so, etwa im Rahmen der Bremsensteuerung und -sensorik, einen sicheren und störungsfreien Daten- oder Signalfluss zu ermöglichen. Die Anordnung des Signal- oder Steuerkabels auf der den Bremsbelägen abgewandten Seite des Haltebügels schützt das Kabel vor unmittelbarer Hitzeeinwirkung durch die im Bremsbetrieb Hitze abstrahlenden Bremsenteile, d. h. die Bremsscheibe und die Bremsbeläge.

Der Kabelhalter weist über einer Teillänge, auf welcher er zusammen mit der den Bremsbelägen abgewandten Seite des Haltebügels einen geschlossenen Querschnitt für das Kabel bildet, einen Quersteg auf. Dieser verhindert einerseits, dass das Signal- oder Steuerkabel, etwa aufgrund der im Fahrbetrieb auftretenden Kräfte und Erschütterungen, die durch den Haltebügel gewährte sichere Abdeckung verlässt. Von zusätzlicher Bedeutung ist der Quersteg des Kabelhalters in Verbindung mit einer in Längsrichtung des Haltebügels angeordneten Blattfeder, die von außen her federnd gegen den Haltebügel abgestützt ist. Diese Blattfeder ist unter dem Quersteg des Kabelhalters hindurchgeführt. Denn beim Lösen des Niederhalters, etwa zum Zwecke des Austauschs der Bremsbeläge, kann es passieren, dass die unter Vorspannung stehende Blattfeder aufgrund Ihrer Eigenspannung schlagartig entspannt. Hierdurch besteht eine erhöhte Verletzungsgefahr für den mit der Bremsenwartung betrauten Monteur. Da aber die Blattfeder unter dem Quersteg des Kabelhalters, diesen kreuzend, hindurchgeführt ist, verhindert der Quersteg zumindest ein unerwartetes Wegspringen der Blattfeder. Die Ausbildung des Querstegs an dem Kabelhalter trägt daher zur Sicherheit der Scheibenbremse bei den notwendigen Wartungsartieiten bei.

Gemäß einer Ausgestaltung ist der Kabelhalter mit Formschlusselementen versehen, welche die beiden Längsränder des Haltebügels urngreifen. Zur Erzielung eines ausreichenden Formschlusses ist es ferner von Vorteil, wenn der Haltebügel an seinen Längsrändern jeweils mit einer Schräge versehen ist, und sich die Formschlusselemente des Kabelhalters an den Schrägen abstützen.

Um das Aufsetzen und Abnehmen des Kabelhalters zu vereinfachen, kann gemäß einer weiteren Ausgestaltung zumindest eines der beiden Formschlusselemente unter Verformung des Kabelhalters auf den jeweiligen Längsrand aufclipsbar sein.

Von Bedeutung für die sichere und geschützte Unterbringung des Signal- und Steuerkabels ist auch eine hinreichende Längsfixierung, d.h. in Längsrichtung des Niederhalters. Daher wird mit einer weiteren Ausgestaltung vorgeschlagen, dass Kabelhalter und Haltebügel in Längsrichtung gegeneinander verriegelt sind. Vorzugsweise ist zum Zwecke dieser Längsverriegelung der Haltebügel mit mindestens einem quer oder schräg zu seiner Längserstreckung angeordneten Anschlag versehen, und ebenso der Kabelhalter.

Zur Sicherung der unter Spannung stehenden Blattfeder gegen ein unerwartetes Wegspringen trägt ferner bei, wenn diese einen gebogenen Längsabschnitt aufweist, sie sich ausschließlich mit diesem Längsabschnitt gegen den Haltebügel abstützt, und sich der Quersteg des Kabelhalters über diesem Längsabschnitt befindet.

Gemäß einer weiteren Ausgestaltung deckt der Quersteg des Kabelhalters einen quer verlaufenden Abschnitt des Kabels nach außen hin ab.

Gemäß einer weiteren Ausgestaltung ist das Kabel durch an dem Kabelhalter angeformte Laschen hindurchgeführt. Die Anformung von Laschen an dem Kabelhalter ist fertigungstechnisch günstig. Außerdem lässt sich auf diese Weise das Kabel in einem gewissen Abstand zur Außenseite des Haltebügels führen, so dass ein unmittelbarer Kontakt und damit auch Wärmekontakt zwischen Kabel und Außenseite des Haltebügels vermieden wird.

Gemäß einer weiteren Ausgestaltung ist an dem Kabelhalter eine zu dem Haltebügel hin offene Rinne angeformt, welche das Kabel aufnimmt und nach außen hin abdeckt.

Weitere Einzelheiten und Vorteile ergeben sich aus der nachfolgenden Beschreibung zweier auf der Zeichnung dargestellter Ausführungsbeispiele. Im Einzelnen zeigen:
- Figur 1: in einer ersten Ausführungsform eine Draufsicht auf einen erfindungsgemäßen Niederhalter einschließlich eines erfindungsgemäßen Kabelhalters mit den darunter angeordneten Bremsbelägen sowie der Bremsscheibe einer Scheibenbremse;
- Figur 2: das Layout des aus flachem Metallblech gestanzten Kabelhalters vor dessen Verformung;
- Figur 3: einen Querschnitt nur durch den Niederhalter in der in Figur 1 bezeichneten Schnittebene III-III;
- Figur 3a: eine Einzelheit aus Figur 3;
- Figur 4: einen Querschnitt durch den sich auf dem Bremsbelag abstützenden Niederhalter;
- Figur 5: in einer zweiten Ausführungsform eine Draufsicht auf einen erfindungsgemäßen Niederhalter einschließlich eines erfindungsgemäßen Kabelhalters;
- Figur 6: eine der Figur 5 entsprechende Draufsicht auf lediglich den Kabelhalter mit dem darin eingesetzten Kabelstrang und
- Figur 7: eine Draufsicht auf die Außenseite des Haltebügels, auf den der in Figur 6 dargestellte Kabelhalter aufclipsbar ist.

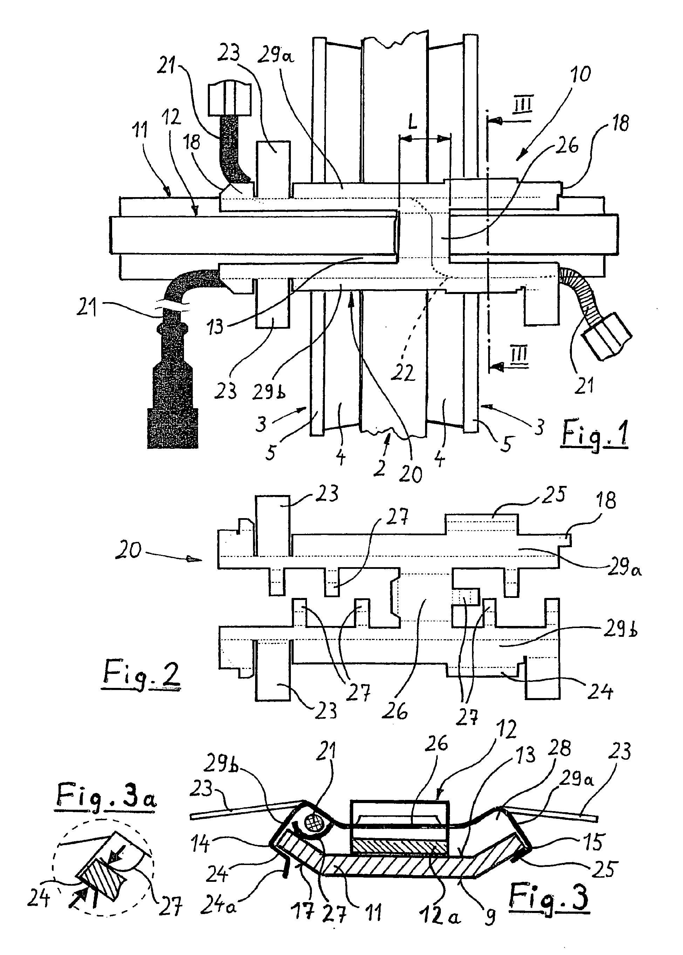

Die Figuren 1 und 3 zeigen in Draufsicht und Querschnitt einen ersten, nach der Erfindung ausgebildeten Niederhalter. Im Betriebszustand der Scheibenbremse überbrückt dieser außen den Belagschacht der Scheibenbremse, d.h. jenen Raum des Bremsgehäuses oder des Bremssattels, in welchem die Bremsbeläge 3 angeordnet sind. Die Bremsbeläge 3 bestehen in üblicher Weise aus dem eigentlichen Reibbelag 4 sowie einer die Führung und Abstützung der Bremsbeläge im Belagschacht übernehmenden Belagrückenplatte 5. Zwischen den Bremsbelägen 3 befindet sich die Bremsscheibe 2 der Scheibenbremse. Der länglich gestaltete Niederhalter 10 erstreckt sich, wie Figur 1 ebenfalls erkennen lässt, parallel zur Drehachse der Bremsscheibe 2 und damit zugleich rechtwinklig zu den Bremsbelägen 3, und er überbrückt diese Bauteile. Beide Enden des Niederhalters 10 sind mittelbar oder unmittelbar am Gehäuse oder am Bremssattel der Scheibenbremse befestigt. Zu diesem Zweck ragt das in Figur 1 links dargestellte eine Ende des Niederhalters 10 in eine Ausnehmung des Bremssattels hinein. Das andere, in Figur 1 rechts dargestellte Ende des Niederhalters 10 kann mittels eines Bolzens am Gehäuse der Scheibenbremse festgelegt sein.

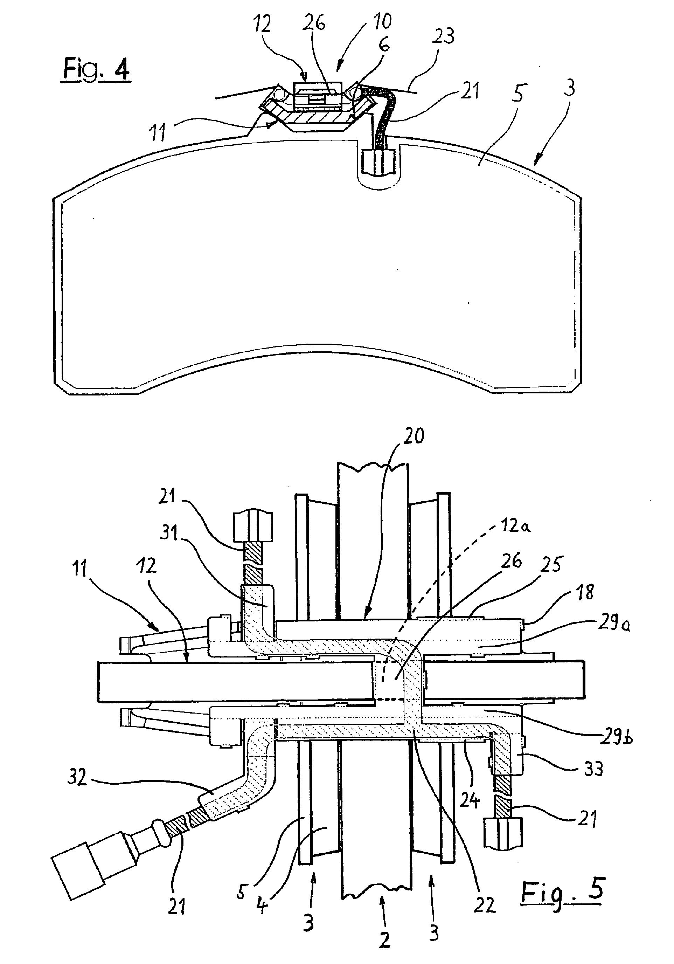

Zur Sicherung der Bremsbeläge 3 im Belagschacht besteht der Niederhalter 10 aus einem starren Haltebügel 11 und einer biegeelastischen Blattfeder 12. Der Haltebügel 11 weist gemäß Figur 3 einen Querschnitt mit einer den Bremsbelägen zugewandten Unterseite 9 auf, an die sich zu beiden Längsrändern 14, 15 hin Schrägen 17 anschließen, wodurch der Haltebügel 11 einen in etwa trapezförmigen Querschnitt zeigt. Den Bremsbelägen abgewandt weist der Haltebügel 11 eine Außenseite mit einer in etwa trapezförmigen Rinne auf. Mit den zwei Schrägen 17 stützt er sich, wie Fig. 4 zeigt, von außen auf den entsprechend gestalteten Rändern 6 der Belagrückenplatten 5 ab und hält auf diese Weise die Bremsbeläge 3 in dem Belagschacht, so dass die Bremsbeläge 3 nicht nach radial außen, bezogen auf die Drehachse der Bremsscheibe, aus dem Belagschacht heraustreten oder herausfallen können.

Die aus Federstahl bestehende Blattfeder 12 ist über ihre Länge partiell gebogen. Sie ist mit ihrenbeiden Enden am Gehäuse bzw. Sattel der Scheibenbremse festgelegt. Sie erstreckt sich längs des starren Haltebügels 11 und ist von außen her gegen den Haltebügel 11 abgestützt. Die Abstützung ist dergestalt, dass sich die Blattfeder 12 nicht auf ihrer ganzen Länge, sondern nur auf der vergleichsweise kurzen Länge eines gebogenen Längsabschnitts 12a am ebenen Boden der Rinne 13 des Haltebügels 11 abstützt, und daher nur an diesem Ort mit einer Federkraft in Richtung auf die Bremsbeläge 3 beaufschlagt. Auf diese Weise stützt sich der Haltebügel 11, obwohl selbst starr, federnd gegen die in Fig. 4 dargestellte, trapezförmige Außenrandkontur 6 der Belagrückenplatte 5 ab.

Weiterer Bestandteil des Niederhalters 10 ist ein auf dem Haltebügel 11 durch Aufclipsen befestigbarer Kabelhalter 20. Dieser besteht aus dünnwandigem, gestanztem und durch Biegen verformtem Blech. Die Fig. 2 zeigt das Layout des flachen Bleches nach dem Stanzen, jedoch vor dem Biegen.

Der Kabelhalter 20 besteht aus zwei in etwa gleich langen und zueinander parallelen Längsteilen 29a, 29b, und einem diese auf weniger als einem Viertel der Gesamtlänge miteinander verbindenden Quersteg 26. Dieser befindet sich ungefähr auf der Mitte der Gesamtlänge des Kabelhalters. Entlang der außen liegenden Längsränder sind die Längsteile 29a, 29b mit winkelförmigen Formschlusselementen 24, 25 versehen. Diese umgreifen, wie Figur 3 erkennen lässt, die entsprechenden Längsränder 14, 15 und zum Teil auch die Schrägen 17 des Haltebügels 11, und fixieren auf diese Weise den Kabelhalter 20 in Querrichtung an dem Haltebügel. Das eine Formschlusselement 24 weist zusätzlich zu einem den Längsrand 14 des Haltebügels 11 umgreifenden Abschnitt einen weiteren, von dem Haltebügel 11 nach außen abstehenden Abschnitt 24a auf. Dieser Abschnitt 24a ermöglicht ein Aufclipsen des Kabelhalters 20 auf den Haltebügel und bietet umgekehrt einen Greifbereich, um das Formschlusselement 24 durch Aufbiegen wieder von dem entsprechenden Längsrand 14 zu lösen.

Durch entsprechende Blechverformung des Kabelhalters 20 sind dessen Längsteile 29a, 29b zu in Längsrichtung des Niederhalters verlaufenden Rinnen 28 geformt. Die Rinnen 28 sind zu dem Haltebügel 11 hin offen. Sie bieten genügend Platz und Schutz für die Längshindurchführung eines Signal- oder Steuerkabels 21 der Bremse. Entlang der inneren, sich gegenüberstehenden Kanten der beiden Längsteile 29a, 29b sind mehrere Laschen 27 angeformt, welche das in der Rinne 28 verlaufende Kabel 21 zumindest über einen Teilumfang umschließen, und auf diese Weise innen an dem Kabelhalter 20 fixieren. Aufgrund der Lage und Gestalt der Laschen 27 weist das Signal- oder Steuerkabel 21 einen Abstand zu der Außenseite 13 des Haltebügels 11 auf. Die Laschen 27 verhindern also einen unmittelbaren Kontakt und damit Wärmekontakt zwischen dem Kabel 21 und dem Haltebügel 11.

Gemäß Fig. 3a können die Laschen 27 auch als Klemmelemente dienen, wenn zwischen ihnen und den Formschlusselementen 24, 25 der Rand des Haltebügels 11 federnd eingeklemmt wird.

Für die Kabelführung von Vorteil sind am Stanzblech angeformte Niederhalter 23 in Gestalt von Laschen des Kabelhalters 20, welche nach seitlich außen von dem Kabelhalter 20 abstehen. An ihnen können sich, wie Fig. 4 zeigt, frei verlaufende Kabelabschnitte von unten abstützen. Hierdurch wird verhindert, dass die Kabelabschnitte zu weit nach außen gelangen und es zu einem Kontakt des Kabels 21 zu drehenden Fahrzeugteilen und insbesondere zum Fahrzeugrad kommt.

Fig. 1 und Fig. 2 lässt erkennen, dass auch der Quersteg 26 einstückiger Bestandteil des Kabelhalters 20 ist. Der Quersteg 26 erstreckt sich nur über eine Teillänge L der Gesamtlänge des Kabelhalters 20, welche weniger als ein Viertel der Gesamtlänge beträgt. Die Verbindung der Längsteile 29a, 29b mittels des relativ kurzen Querstegs 26 verleiht dem Kabelhalter ausreichende Flexibilität, um dessen Aufclipsen auf den Haltebügel 11 zu erleichtern bzw. umgekehrt das Entfernen vom Haltebügel.

Darüber hinaus leistet der Quersteg 26 einen Beitrag zur Sicherheit beim Montieren sowie vor allem beim Demontieren des Niederhalters. Muss dieser zum Austausch der Bremsbeläge 3 abgenommen werden, kann es bei nicht sachgemäßem Vorgehen zu einem schlagartigen Entspannen der unter starker Biegevorspannung stehenden Blattfeder 12 kommen, wodurch diese, bezogen auf den Belagschacht, nach außen wegspringen kann. Dies jedoch verhindert der Quersteg 26, da er sich quer über die langgestreckte Blattfeder 12 erstreckt. Denn zumindest jener gebogene Längsabschnitt 12 a der Blattfeder 12, in dessen Bereich sie sich federnd gegen den Haltebügel 11 abstützt, führt unter dem Quersteg 26 hindurch. Bei einem schlagartigen Entspannen der Blattfeder 12 wird diese durch den Quersteg 26 zumindest erheblich gebremst.

Auf jener Länge L, auf welcher der Kabelhalter 20 den Quersteg 26 aufweist, bildet der Kabelhalter 20 zusammen mit der den Bremsbelägen 3 abgewandten Seite 13 des Haltebügels 11 einen allseits geschlossenen Kanal bzw. einen geschlossenen Querschnitt, durch den das Signal- oder Steuerkabel 21 einsträngig oder mehrsträngig hindurchgeführt ist, ohne seitlich oder nach außen ausweichen zu können. Ferner bildet der Quersteg 26 eine Abdeckung, unter der ein bei 22 abgezweigter Arm des Kabels 21 geschützt liegend hindurchgeführt werden kann, ohne von außen sichtbar zu sein.

Der Kabelhalter 20 ist nicht nur in Querrichtung, sondern auch in Längsrichtung formschlüssig an dem starren Haltebügel 11 festgelegt. Zu diesem Zweck ist der Haltebügel 11, über seine Länge betrachtet, unterschiedlich breit und weist entsprechende Rücksprünge auf. An den auf diese Weise gebildeten Anschlägen stützen sich an dem Kabelhalter 20 durch Biegen angeformte Laschen ab, und sichern so den Kabelhalter 20 in Längsrichtung an dem Haltebügel 11.

Die Figuren 5 - 7 zeigen eine zweite Ausführungsform eines erfindungsgemäßen Niederhalters und eines erfindungsgemäßen Kabelhalters. Für gleiche oder funktionsgleiche Teile sind hierbei dieselben Bezugszeichen verwendet, wie bei der ersten Ausführungsform gemäß den Figuren 1 - 4.

Bei dieser zweiten Ausführungsform sind die einzelnen Stränge oder Enden des Signal- oder Steuerkabels 21 zur Seite hin unterhalb von Laschen 31, 32, 33 geführt, die einstückig an dem gestanzten Kabelhalter 20 angeformt sind und seitlich von diesem abstehen. Das Signal- oder Steuerkabel 21 ist daher noch weitgehender nach außen hin abgedeckt, als bei der ersten Ausführungsform. Durch Biegen verformbare Laschen 27 fixieren den jeweiligen Abschnitt des Signal- oder Steuerkabels unterhalb der jeweiligen, zur Seite abstehenden Lasche 31, 32, 33.

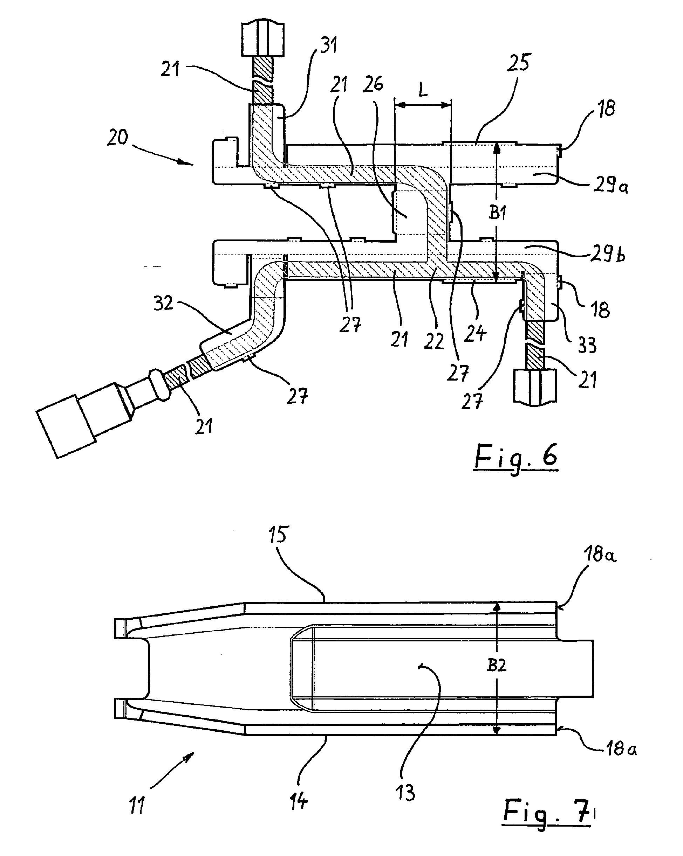

Um den Kabelhalter 20 nicht nur in Querrichtung, sondern auch in Längsrichtung formschlüssig an dem starren Haltebügel 11 festzulegen, ist auch bei dieser zweiten Ausführungsform der Haltebügel 11, über seine Länge betrachtet, unterschiedlich breit unter Ausbildung einer Stufe und eines axial oder schräg ausgerichteten Anschlags 18a. An diesem Anschlag 18a stützt sich eine an dem Kabelhalter 20 durch Biegen angeformte Lasche 18 (Fig. 6) ab, und sichert auf diese Weise den Kabelhalter 20 in Längsrichtung an dem Haltebügel 11.

Ferner lassen die Figuren 6 und 7 erkennen, dass die Breite B1 des Kabelhalters 20 im Bereich der Formschlusselemente 24, 25 zwischen 100% und 125% der dortigen Breite B2 des Haltebügels 11 beträgt.

### Bezugszeichenliste

- 2: Bremsscheibe
- 3: Bremsbelag
- 4: Reibbelag
- 5: Belagrückenplatte
- 6: Außenrandkontur
- 9: Unterseite
- 10: Niederhalter
- 11: Haltebügel
- 12: Blattfeder
- 12a: gebogener Längsabschnitt der Blattfelder
- 13: Außenseite, Rinne
- 14: Längsrand
- 15: Längsrand
- 17: Schräge
- 18: Anschlag
- 18a: Anschlag
- 20: Kabelhalter
- 21: Signal- oder Steuerkabel
- 22: Verzweigung
- 23: Niederhalter
- 24: Formschlusselement
- 24a: Abschnitt
- 25: Formschlusselement
- 26: Quersteg
- 27: Lasche
- 28: Rinne
- 29a: Längsteil
- 29b: Längsteil
- 31: Lasche
- 32: Lasche
- 33: Lasche
- B1: Breite
- B2: Breite
- L: Länge

## Patentansprüche

1. Niederhalter für die Bremsbeläge einer Scheibenbremse, mit einem an der Scheibenbremse festlegbaren und sich quer zu den Bremsbelägen erstreckenden Haltebügel (11), und mit einem an dem Haltebügel (11) befestigten Kabelhalter (20), welcher zusammen mit der den Bremsbelägen abgewandten Seite (13) des Haltebügels (11) einen zumindest über eine Teillänge des Haltebügels (11) geschlossenen Querschnitt für die Hindurchführung eines Signal- oder Steuerkabels (21) bildet, **dadurch gekennzeichnet, dass** der Kabelhalter (20) über die den geschlossenen Querschnitt bildende Länge (L) einen Quersteg (26) aufweist, unter dem eine in Längsrichtung des Haltebügels (11) angeordnete Blattfeder (12) hindurchgeführt ist, und dass die Blattfeder (12) federnd gegen den Haltebügel (11) abgestützt ist.

2. Niederhalter nach Anspruch 1, **dadurch gekennzeichnet, dass** der Kabelhalter (20) mit die beiden Längsränder (14, 15) des Haltebügels (11) umgreifenden Formschlusselementen (24, 25) versehen ist.

3. Niederhalter nach Anspruch 2, **dadurch gekennzeichnet, dass** der Haltebügel (11) an seinen Längsrändern (14, 15) jeweils mit einer Schräge (17) versehen ist, und dass sich die Formschlusselemente (24, 25) des Kabelhalters (20) an den Schrägen (17) abstützen.

4. Niederhalter nach Anspruch 2 oder 3, **dadurch gekennzeichnet, dass** zumindest eines der beiden Formschlusselemente (24) unter Verformung des Kabelhalters (20) auf den jeweiligen Längsrand (14) aufclipsbar ist.

5. Niederhalter nach einem der vorangehenden Ansprüche, **dadurch gekennzeichnet, dass** Kabelhalter (20) und Haltebügel (11) in Längsrichtung gegeneinander verriegelt sind.

6. Niederhalter nach Anspruch 5, **dadurch gekennzeichnet, dass** zur Längsverriegelung des Kabelhalters der Haltebügel (11) mit mindestens einem quer oder schräg zu seiner Längserstreckung angeordneten Anschlag (18a) versehen ist.

7. Niederhalter nach einem der vorangehenden Ansprüche, **dadurch gekennzeichnet, dass** die Blattfeder (12) den Quersteg (26) kreuzend unter diesem hindurchgeführt ist.

8. Niederhalter nach Anspruch 7, **dadurch gekennzeichnet, dass** die Blattfeder (12) einen gebogenen Längsabschnitt (12a) aufweist und sie sich ausschließlich mit diesem Längsabschnüt (12a) gegen den Haltebügel (11) abstützt, und dass sich der Quersteg (26) des Kabelhalters über dem Längsabschnitt (12a) befindet.

9. Niederhalter nach einem der vorangehenden Ansprüche, **dadurch gekennzeichnet, dass** der Quersteg (26) einen quer verlaufenden Abschnitt des Kabels (21) nach außen hin abdeckt.

10. Niederhalter nach einem der vorangehenden Ansprüche, **dadurch gekennzeichnet, dass** das Kabel (21) durch an dem Kabelhalter (20) angeformte Laschen (27) hindurchgeführt ist.

11. Niederhalter nach einem der vorangehenden Ansprüche, **dadurch gekennzeichnet, dass** an dem Kabelhalter (20) mindestens eine zu dem Haltebügel (11) hin offene Rinne (28) angeformt ist, welche das Kabel (21) aufnimmt und nach außen hin abdeckt.

12. Niederhalter nach einem der vorangehenden Ansprüche, **dadurch gekennzeichnet, dass** das Kabel (21) eine Verzweigung (22) aufweist.

13. Niederhalter nach einem der Ansprüche 2 bis 12, **dadurch gekennzeichnet, dass** die Breite (B1) des Kabelhalters (20) im Bereich der Formschlusselemente (24, 25) zwischen 100% und 125% der dortigen Breite (B2) des Haltebügels (11) beträgt.

14. Kabelhalter mit einem daran befestigten Signal- oder Steuerkabel (21) einer Scheibenbremse, der aus dünnem Material geformt ist und zwei voneinander beabstandete und zueinander parallele Längsteile (29a, 29b) und einen diese miteinander verbindenden Quersteg (26) aufweist, wobei sich der Quersteg (26) nur über eine Teillänge (L) des Kabelhalters erstreckt und er sich in etwa auf der Mitte der Länge des Kabelhalters befindet, **gekennzeichnet durch** an dem Kabelhalter angeformte Formschlusselemente (24, 25), die zur Verbindung des Kabelhalters mit einem Niederhalter für die Bremsbeläge einer Scheibenbremse geeignet sind, wobei das eine
Formschlusselement (24) am außen liegenden Längsrand (14) des einen Längsteils (29b), und das andere Formschlusselement (25) am außen liegenden Längsrand (15) des anderen Längsteils (29a) angeformt ist.

15. Kabelhalter nach Anspruch 14, **dadurch gekennzeichnet, dass** die Länge (L), über die sich der Quersteg (26) erstreckt, weniger als ein Viertel der Gesamtlänge des Kabelhalters beträgt.

16. Kabelhalter nach einem der Ansprüche 14 oder 15, **gekennzeichnet durch** daran angeformte Laschen (27), **durch** die das Kabel (21) hindurchführt.

17. Kabelhalter nach einem der Ansprüche 14 bis 16, **gekennzeichnet durch** einen daran quer oder schräg angeformten Anschlag (18).

18. Kabelhalter nach Anspruch 14, **dadurch gekennzeichnet, dass** zum Ermöglichen eines Aufclipsens des Kabelhalters das eine Formschlusselement (24) einen nach außen abstehenden Abschnitt (24a) aufweist.

## Claims

1. Hold-down for the brake linings of a disc brake, having a holding bracket (11) which can be fixed on the disc brake and extends transversely with respect to the brake linings, and having a cable holder (20) which is fastened to the holding bracket (11) and, together with that side (13) of the holding bracket (11) which faces away from the brake linings, forms a cross section which is closed at least over a part length of the holding bracket (11) for guiding through a signal or control cable (21), **characterized in that** the cable holder (20) has a transverse web (26) over the length (L) which forms the closed cross section, below which a leaf spring (12) which is arranged in the longitudinal direction of the holding bracket (11) is guided through, and **in that** the leaf spring (12) is supported resiliently against the holding bracket (11).

2. Hold-down according to Claim 1, **characterized in that** the cable holder (20) is provided with positively locking elements (24, 25) which engage around the two longitudinal edges (14, 15) of the holding bracket (11).

3. Hold-down according to Claim 2, **characterized in that** the holding bracket (11) is provided at its longitudinal edges (14, 15) in each case with a bevel (17), and **in that** the positively locking elements (24, 25) of the cable holder (20) are supported on the bevels (17).

4. Hold-down according to Claim 2 or 3, **characterized in that** at least one of the two positively locking elements (24) can be clipped onto the respective longitudinal edge (14) with deformation of the cable holder (20).

5. Hold-down according to one of the preceding claims, **characterized in that** the cable holder (20) and holding bracket (11) are locked with respect to one another in the longitudinal direction.

6. Hold-down according to Claim 5, **characterized in that**, for longitudinal locking of the cable holder, the holding bracket (11) is provided with at least one stop (18a) which is arranged transversely or obliquely with respect to its longitudinal extent.

7. Hold-down according to one of the preceding claims, **characterized in that** the leaf spring (12) is guided through below the transverse web (26) so as to cross the latter.

8. Hold-down according to Claim 7, **characterized in that** the leaf spring (12) has a bent longitudinal section (12a) and is supported exclusively by way of the said longitudinal section (12a) against the holding bracket (11), and **in that** the transverse web (26) of the cable holder is situated above the longitudinal section (12a).

9. Hold-down according to one of the preceding claims, **characterized in that** the transverse web (26) covers a transversely running section of the cable (21) towards the outside.

10. Hold-down according to one of the preceding claims, **characterized in that** the cable (21) is guided through tabs (27) which are formed on the cable holder (20).

11. Hold-down according to one of the preceding claims, **characterized in that** at least one groove (28) which is open towards the holding bracket (11), receives the cable (21) and covers the latter towards the outside is formed on the cable holder (20).

12. Hold-down according to one of the preceding claims, **characterized in that** the cable (21) has a branch (22).

13. Hold-down according to one of Claims 2 to 12, **characterized in that** the width (B1) of the cable holder (20) in the region of the positively locking elements (24, 25) is between 100% and 125% of the width (B2) there of the holding bracket (11).

14. Cable holder having a signal or control cable (21), fastened to it, of a disc brake, which cable holder is formed from thin material and has two longitudinal parts (29a, 29b), which are spaced apart from one another and are parallel to one another, and a transverse web (26) which connects the said longitudinal parts (29a, 29b) to one another, the transverse web (26) extending only over a part length (L) of the cable holder and being situated approximately at the middle of the length of the cable holder, **characterized by** positively locking elements (24, 25) which are formed on the cable holder and are suitable for connection of the cable holder to a hold-down for the brake linings of a disc brake, one positively locking element (24) being formed at the outer longitudinal edge (14) of one longitudinal part (29b) and the other positively locking element (25) being formed at the outer longitudinal edge (15) of the other longitudinal part (29a).

15. Cable holder according to Claim 14, **characterized in that** the length (L), over which the transverse web (26) extends, is less than one quarter of the overall length of the cable holder.

16. Cable holder according to either of Claims 14 and 15, **characterized by** tabs (27) which are formed thereon and through which the cable (21) leads.

17. Cable holder according to one of Claims 14 to 16, **characterized by** a stop (18) which is formed transversely or obliquely thereon.

18. Cable holder according to Claim 14, **characterized in that**, in order to make it possible for the cable holder to be clipped on, one positively locking element (24) has an outwardly protruding section (24a).

## Revendications

1. Système d'assujettissement pour les garnitures de frein d'un frein à disque, comprenant un étrier de retenue (11) pouvant être fixé sur le frein à disque et s'étendant transversalement aux garnitures de frein, et comprenant un dispositif de retenue de câble (20) fixé sur l'étrier de retenue (11), lequel forme, conjointement avec le côté (13) opposé aux garnitures de frein de l'étrier de retenue (11), une section transversale fermée au moins sur une longueur partielle de l'étrier de retenue (11) pour le passage d'un câble de signaux ou d'un câble de commande (21), **caractérisé en ce que** le dispositif de retenue de câble (20) présente, sur la longueur (L) formant la section transversale fermée, une nervure transversale (26) en dessous de laquelle est guidé un ressort à lame (12) disposé dans la direction longitudinale de l'étrier de retenue (11), et **en ce que** le ressort à lame (12) est supporté de manière élastique contre l'étrier de retenue (11).

2. Système d'assujettissement selon la revendication 1, **caractérisé en ce que** le dispositif de retenue de câble (20) est pourvu d'éléments d'engagement positif (24, 25) venant en prise autour des deux bords longitudinaux (14, 15) de l'étrier de retenue (11).

3. Système d'assujettissement selon la revendication 2, **caractérisé en ce que** l'étrier de retenue (11) est pourvu, au niveau de ses bords longitudinaux (14, 15), d'un biseau respectif (17), et **en ce que** les éléments d'engagement positif (24, 25) du dispositif de retenue de câble (20) s'appuient contre les biseaux (17).

4. Système d'assujettissement selon la revendication 2 ou 3, **caractérisé en ce qu'**au moins l'un des deux éléments d'engagement positif (24) peut être encliqueté sur le bord longitudinal respectif (14) par déformation du dispositif de retenue de câble (20).

5. Système d'assujettissement selon l'une quelconque des revendications précédentes, **caractérisé en ce que** le dispositif de retenue de câble (20) et l'étrier de retenue (11) sont verrouillés l'un à l'autre dans la direction longitudinale.

6. Système d'assujettissement selon la revendication 5, **caractérisé en ce que** pour le verrouillage longitudinal du dispositif de retenue de câble, l'étrier de retenue (11) est pourvu d'au moins une butée (18a) disposée transversalement ou obliquement par rapport à son étendue longitudinale.

7. Système d'assujettissement selon l'une quelconque des revendications précédentes, **caractérisé en ce que** le ressort à lame (12) est guidé à travers la nervure transversale (26) en la croisant par le dessous.

8. Système d'assujettissement selon la revendication 7, **caractérisé en ce que** le ressort à lame (12) présente une portion longitudinale cintrée (12a) et s'appuie contre l'étrier de retenue (11) exclusivement par le biais de cette portion longitudinale (12a), et **en ce que** la nervure transversale (26) du dispositif de retenue de câble se trouve au-dessus de la portion longitudinale (12a).

9. Système d'assujettissement selon l'une quelconque des revendications précédentes, **caractérisé en ce que** la nervure transversale (26) recouvre vers l'extérieur une portion du câble (21) s'étendant transversalement.

10. Système d'assujettissement selon l'une quelconque des revendications précédentes, **caractérisé en ce que** le câble (21) est guidé à travers des pattes (27) façonnées sur le dispositif de retenue de câble (20).

11. Système d'assujettissement selon l'une quelconque des revendications précédentes, **caractérisé en ce qu'**au moins une rigole (28) ouverte vers l'étrier de retenue (11) est façonnée sur le dispositif de retenue de câble (20), celle-ci recevant le câble (21) et le recouvrant vers l'extérieur.

12. Système d'assujettissement selon l'une quelconque des revendications précédentes, **caractérisé en ce que** le câble (21) présente une ramification (22).

13. Système d'assujettissement selon l'une quelconque des revendications 2 à 12, **caractérisé en ce que** la largeur (B1) du dispositif de retenue de câble (20) dans la région des éléments d'engagement positif (24, 25) constitue entre 100 % et 125 % de la largeur à cet endroit (B2) de l'étrier de retenue (11).

14. Dispositif de retenue de câble comprenant un câble des signaux ou de commande (21) fixé sur celui-ci pour un frein à disque, lequel dispositif de retenue de câble est formé d'un matériau mince et présente deux parties longitudinales espacées l'une de l'autre et parallèles l'une à l'autre (29a, 29b) et une nervure transversale (26) reliant celles-ci l'une à l'autre, la nervure transversale (26) s'étendant seulement sur une longueur partielle (L) du dispositif de retenue de câble et se trouvant approximativement au centre de la longueur du dispositif de retenue de câble, **caractérisé par** des éléments d'engagement positif (24, 25) façonnés sur le dispositif de retenue de câble, lesquels sont appropriés pour connecter le dispositif de retenue de câble à un système d'assujettissement pour les garnitures de frein d'un frein à disque, l'un des éléments d'engagement positif (24) étant façonné sur le bord longitudinal extérieur (14) de l'une des parties longitudinales (29b), et l'autre élément d'engagement positif (25) étant façonné sur le bord longitudinal extérieur (15) de l'autre partie longitudinale (29a).

15. Dispositif de retenue de câble selon la revendication 14, **caractérisé en ce que** la longueur (L) sur laquelle s'étend la nervure transversale (26) est inférieure à un quart de la longueur totale du dispositif de retenue de câble.

16. Dispositif de retenue de câble selon l'une quelconque des revendications 14 ou 15, **caractérisé par** des pattes (27) façonnées sur celui-ci, à travers lesquelles est guidé le câble (21).

17. Dispositif de retenue de câble selon l'une quelconque des revendications 14 à 16, **caractérisé par** une butée (18) façonnée transversalement ou obliquement sur celui-ci.

18. Dispositif de retenue de câble selon la revendication 14, **caractérisé en ce que** pour permettre un encliquetage du dispositif de retenue de câble, l'un des éléments d'engagement positif (24) présente une portion (24a) faisant saillie vers l'extérieur.
